# EUROPÄISCHE PATENTSCHRIFT

(11) **EP 3 770 066 B1**
(45) Veröffentlichungstag und Bekanntmachung des Hinweises auf die Patenterteilung: **10.11.2021**
(21) Anmeldenummer: 19188376.8
(22) Anmeldetag: 25.07.2019
(51) Int. Cl.: B64C 39/02

(54) **DROHNE ZUM GERÄUSCHARMEN AUSLIEFERN VON OBJEKTEN**
DRONE FOR LOW-NOISE DELIVERY OF OBJECTS
DRONE POUR LA DISTRIBUTION SILENCIEUSE D'OBJETS

(43) Veröffentlichungstag der Anmeldung: 27.01.2021
(73) Patentinhaber: DELIVERY EAGLE AG, 9491 Ruggell (LI)
(72) Erfinder: Weirather, Herbert, 9491 Ruggell (LI)
(74) Vertreter: Kaminski Harmann

(56) Entgegenhaltungen:
- WO-A1-2015/089679
- WO-A1-2019/108174
- RU-C1- 2 681 423
- US-A1- 2012 261 523
- US-A1- 2018 099 764
- US-A1- 2019 031 339
- US-B1- 6 845 939

## Beschreibung

### GEBIET DER ERFINDUNG

Die vorliegende Erfindung betrifft eine Drohne zum Ausliefern von Objekten, eine Start- und Landevorrichtung für eine als Starrflügler ausgebildete Drohne, ein System aus einer Drohne und einer Start- und Landevorrichtung, sowie ein Anflugverfahren für das besagte System.

### HINTERGRUND DER ERFINDUNG

Aus dem Stand der Technik sind Drohnen zum Ausliefern von Paketen bekannt. Die grossen Vorteile für eine Paketauslieferung mit Drohnen liegen auf der Hand. In erster Linie sind sie enorm schnell. Drohnen können den direkten Weg fliegen, müssen nicht andauernd abbremsen und beschleunigen, stehen nicht im Stau und sind sehr energieeffizient. Alle Drohnen Konzepte sind im Vergleich zu einer Autolieferung sehr umweltfreundlich, da sie elektrisch fliegen, kein CO₂, keine Russpartikel oder giftige Gase ausstoßen, keinen Gummiabrieb haben und vor allem umweltschädliche Strassen nicht gebraucht werden bzw. diese sogar entlasten. Drohnen reduzieren nicht nur die Lieferzeit drastisch, sondern minimieren weiterhin auch die Kosten auf Seiten der liefernden Unternehmen, da weniger Personal benötig wird.

Multicopter-Drohnen können nahezu ohne Restriktionen definiert im Raum positioniert werden. Allerdings erzeugen sie viel Lärm im Flug, was insbesondere beim Starten, Landen und beim Hovern zum Tragen kommt. Eine nächtliche Belieferung ist dadurch von vorn herein ausgeschlossen. Es sind Paketauslieferungs-Multicopter bekannt, die ein Paket beim Empfänger abseilen während sie sich über der Ablagestelle befinden. Diese Lösung birgt Sicherheitsrisiken, denn Hunde könnten das herablassende Paket attackieren bzw. das Seil packen und die Drohne zum Absturz bringen.

Neben Multicopter-Drohnen gibt es auch die sogenannten Starrflügler ― also Flächenmodelle oder Nurflügel. RU 2 681 423 C1 offenbart eine solche Starrflügler-Drohne. Der Vorteil der klassischen Flugzeugform ist die Reichweite, denn für den Auftrieb wird beim Flugzeug fast keine Energie gebraucht, im Gegensatz zum Multicopter, der den Auftrieb permanent über die Rotoren erzeugen muss. Der Nachteil ist, dass ein Starrflügler nicht so manövrierbar ist, wie ein Multicopter, d.h. er kann nicht beliebig langsam fliegen, in der Luft stehenbleiben oder gar rückwärts fliegen. Es gibt Starrflügler-Drohnen zum Ausliefern von Paketen, wobei das Paket mit einem kleinen Fallschirm auf Höhe einer Landezone abgeworfen werden kann. WO 2019/108174 A1 offenbart eine Startvorrichtung.

Bei den genannten Beispielen eignen sich als Ablageorte ausschliesslich Freiflächen, Gärten oder Flachdächer, wobei nur sehr wenige Personen über solche Ablageorte verfügen. In der Stadt lebende Personen können nur beliefert werden, wenn das Dach auch zugänglich ist. Ausserdem könnten Drittpersonen relativ leichten Zugang zu dem abgeworfenen oder abgeseilten Paket erlangen.

Bekannte Lösungen brauchen zudem viel Platz, die Drohnen täglich zu lagern, etwa um ihre Batterien aufzuladen oder Wartungsarbeiten durchzuführen. Die Lärmemission ist aufgrund des zunehmenden Drohnenverkehrs in der Luft für die Gesellschaft wohl der problematischste Faktor.

### AUFGABE DER ERFINDUNG

Die Erfindung löst daher die Aufgabe, einem Empfänger ein Objekt auszuliefern, ohne dabei störende Lärmemissionen zu verursachen.

### ZUSAMMENFASSUNG DER ERFINDUNG

Die Erfindung betrifft ein System gemäss Anspruch 1, aufweisend eine Starrflügler-Drohne zum Ausliefern von Objekten, aufweisend einen Flügel mit einer Tragfläche und mit Flügelsteuerflächen, mindestens zwei Antriebseinheiten, mindestens ein Heckleitwerk mit Hecksteuerflächen, wobei das Heckleitwerk durch ein mit dem Flügel verbundenes Trägerelement oberhalb des Flügels und hinter dem Flügel angeordnet ist, mindestens ein nach hinten ausgeprägtes und von hinten zugängliches Strukturelement, eine Objekthaltevorrichtung, die oberhalb vom Flügel angeordnet und zur Aufnahme eines Objekts ausgebildet ist, eine Steuerungseinheit, die zum Steuern der Starrflügler-Drohne, insbesondere der Flügelsteuerflächen, der Hecksteuerflächen und der Antriebseinheiten, basierend auf Steuerungssignalen ausgebildet ist und eine Empfangseinheit, die zum Empfangen von Steuerungssignalen ausgebildet ist.

Die Antriebseinheiten können umschlossene Propeller aufweisen, insbesondere Impeller.

Jedes der Eingriffselemente kann als ein Gleitelement oder eine drehbar gelagerte Scheibe ausgebildet sein.

Die Objekthaltevorrichtung kann ein Beförderungssystem aufweisen, das dazu ausgelegt ist, ein von der Objekthaltevorrichtung aufgenommenes Objekt nach vorne oder hinten zu befördern, insbesondere um das Objekt vor oder hinter den Flügel zu befördern und vor oder hinter dem Flügel auszustossen oder um den Schwerpunkt während eines Flug zu verändern.

Die Starrflügler-Drohne kann weiterhin ein Kamerasystem aufweisen, das zu einer Objekterkennung ausgebildet ist, wobei die Steuerungseinheit zum Steuern der Starrflügler-Drohne weiterhin basierend auf der Objekterkennung ausgebildet ist.

Das System umfasst weiter eine Start- und Landevorrichtung, die das folgende aufweist: (a) eine Anbringungsvorrichtung, die dazu ausgebildet ist, die Start- und Landevorrichtung an einer Struktur anzubringen, insbesondere an eine vertikale Seite einer Struktur, (b) ein Führungselement, das mit der Anbringungsvorrichtung verbunden und so ausgerichtet ist, dass es ausgehend von der Anbringungsvorrichtung zur Lotrechten abwärts und in einem Winkel zwischen 1° und 89°, insbesondere 12°, von der Struktur wegführt und (c) ein Halteelement, das quer zu, insbesondere waagerecht an, den Führungselementen angebracht ist und mindestens ein von oben zugängliches Gegenstrukturelement aufweist.

Die Start- und Landevorrichtung kann weiterhin mindestens ein Startführungselement aufweisen, das mit der Anbringungsvorrichtung verbunden ist und ausgehend von der Anbringungsvorrichtung in einem Winkel zwischen 1° und 89° zur Lotrechten aufwärts und von der Struktur wegführt.

Die Start- und Landevorrichtung kann weiterhin eine Objektauffangvorrichtung aufweisen, insbesondere wobei die Anbringungsvorrichtung die Objektauffangvorrichtung umfasst.

Die Start- und Landevorrichtung kann weiterhin eine Festhaltevorrichtung aufweisen, insbesondere aufweisend einen Elektromagneten ausgebildet zum Bereitstellen einer Anziehungskraft zum Anziehen der Starrflügler-Drohne oder aufweisend einen mechanischen Festhaltemechanismus.

Die Erfindung betrifft ein System aufweisend eine Starrflügler-Drohne und eine Start- und Landevorrichtung gemäss den nachfolgenden Ansprüchen.

Das Strukturelement der Starrflügler-Drohne und das Gegenstrukturelement sind dabei ineinandergreifbar ausgebildet, und die Starrflügler-Drohne ist mittels der ineinandergreifenden Strukturelement und Gegenstrukturelement entlang des Halteelements verschiebbar.

Das Startführungselement kann als eine Klemmvorrichtung ausgebildet sein, die zwischen einem offenen Zustand und einem geschlossenen Zustand verschwenkbar ist, wobei die Klemmvorrichtung im offenen Zustand ausgehend von der Anbringungsvorrichtung in einem Winkel zwischen 1° und 89° zur Lotrechten aufwärts und von der Struktur wegführt und im geschlossenen Zustand bis an das Halteelement oder an das Führungselement anstossbar ist, wobei die Klemmvorrichtung motorisiert ist oder unter Vorspannung in den offenen Zustand bringbar ist und ausgelöst durch eine landende Starrflügler-Drohne einen Klemmmechanismus bereitstellt, wobei die Klemmvorrichtung dazu ausgebildet ist, die gelandete Starrflügler-Drohne, insbesondere am Flügel, festzuklemmen.

Die Start- und Landevorrichtung kann ein Lichtleitsystem umfassen, das zumindest ein Leuchtelement oder einen Reflektor aufweist, wobei das Kamerasystem dazu ausgebildet ist, das Leuchtelement oder den Reflektor zu erkennen, wobei die Steuerungseinheit dazu ausgebildet ist, anhand des erkannten Leuchtelements oder Reflektors eine Pose der Start- und Landevorrichtung zu bestimmen und anhand der bestimmten Pose Steuerungssignale zu generieren.

Die Starrflügler-Drohne kann weiterhin eine Schnittstelle aufweisen, die ausgebildet ist zum Empfang von elektrischer Energie und/oder Daten, wobei die Start- und Landevorrichtung eine entsprechende Gegenschnittstelle aufweist, die ausgebildet ist zum Versorgen einer Starrflügler-Drohne mit elektrischer Energie und/oder Daten.

Die Erfindung betrifft auch ein Anflugverfahren gemäss Anspruch 12. Das Anflugverfahren umfasst mindestens die folgenden Schritte:
Beladen einer Starrflügler-Drohne mit einem Objekt,
Steuern der Starrflügler-Drohne basierend auf empfangenen Steuerungssignalen in Richtung eines Zustellortes bis eine definierte Restdistanz zum Zustellort verbleibt,
nach Erreichen der Restdistanz, Deaktivieren der Antriebseinheiten,
Aktivieren eines Lichtleitsystems einer Start- und Landevorrichtung, die an einer Struktur angebracht ist,
Erkennen des Leuchtelements oder des Reflektors mit dem Kamerasystem,
anhand des erkannten Leuchtelements oder Reflektors, Bestimmen einer Pose der Start- und Landevorrichtung mit der Steuerungseinheit,
anhand der bestimmten Pose, Generieren von Steuerungssignalen mit der Steuerungseinheit,
Steuern nur der Flügelsteuerflächen und der Hecksteuerflächen der im Segelflug befindlichen Starrflügler-Drohne basierend auf den generierten Steuerungssignalen,
Durchführen eines Landeanfluges, der die Starrflügler-Drohne zwischenzeitlich unterhalb der Start- und Landevorrichtung sinken und dann parabelartig zur Start- und Landevorrichtung wieder ansteigen lässt,
Erreichen eines Stillstandes der Starrflügler-Drohne bezogen auf eine vertikale Richtung an der Start- und Landevorrichtung,
durch Gravitationskraft verursachtes Absenken der Starrflügler-Drohne in eine Ruheposition an der Start- und Landevorrichtung, wobei ein Strukturelement der Starrflügler-Drohne und ein Gegenstrukturelement eines Halteelementes der Start- und Landevorrichtung ineinandergreifen.

### WEITERE ASPEKTE DER ERFINDUNG

In einer Ausführungsform ist die Objekthaltevorrichtung zwischen den Antriebseinheiten angeordnet.

In einer Ausführungsform ist die Klemmvorrichtung motorisiert und in einer anderen Ausführungsform ist sie (z.B. manuell) unter Vorspannung in den offenen Zustand bringbar und stellt, ausgelöst durch eine landende Drohne, einen Klemmmechanismus bereit. Die Klemmvorrichtung kann dazu ausgebildet sein, die gelandete Drohne festzuklemmen, insbesondere wobei die Klemmvorrichtung mindestens ein Klemmelement aufweist, das den Flügel der Drohne im geschlossenen Zustand mit dem Halteelement festklemmt.

Das Halteelement ist insbesondere so geformt, dass die Drohne ihre Lage darauf mittels der verschiebbaren Eingriffselemente selbststabilisiert, insbesondere selbstzentriert.

Die Start- und Landevorrichtung kann auch ein Lichtleitsystem umfassen, das zumindest ein Leuchtelement oder einen Reflektor aufweist.

Das Leuchtelement und/oder der Reflektor sind bevorzugt an dem Führungselement, ggf. dem Startführungselement, sowie dem Halteelement vorgesehen.

Das Beförderungssystem kann dazu ausgebildet sein, ein von der Objekthaltevorrichtung aufgenommenes Objekt in die Objektauffangvorrichtung zu befördern, wenn die Drohne auf dem Start- und Landevorrichtung ruht.

Der besagte mechanische Festhaltemechanismus kann etwa einen Haken umfassen, der in eine optional von der Drohne umfassten Öse eingreift.

In einer Ausführungsform weist die Start- und Landevorrichtung eine Abstossvorrichtung auf, die für einen Start der Drohne dazu ausgebildet ist, die Drohne mit einem Abstossimpuls von der vertikalen Konstruktion abzulenken, insbesondere wobei die Abstossvorrichtung einen umpolbaren Elektromagneten umfasst, der mit einem von der Drohne umfassten ferromagnetischen Gegenbauteil wechselwirkbar gestaltet ist, und/oder wobei die Abstossvorrichtung einen mechanischen Abstossmechanismus bereitstellt.

Wenn die Rede von "oberhalb" ist, so ist dies bezogen auf eine Ausrichtung der Drohne während eines gewöhnlichen Fluges. Wenn die Rede von "hinter", "hinten", "vor" oder "vorne" ist, so ist dies zusätzlich bezogen auf eine Flugrichtung der Drohne während eines gewöhnlichen Fluges. Bei einem gewöhnlichen Flug ist der Flügel so ausgerichtet, dass sein Profil einen Auftrieb erzeugt.

### KURZE BESCHREIBUNG DER ZEICHNUNGEN

Weitere Vorteile der vorliegenden Erfindung sind aus der detaillierten Beschreibung und den Zeichnungen ersichtlich.
Figur 1 zeigt eine Ausführungsform einer erfindungsgemässen Drohne;
Figur 2 zeigt eine Ausführungsform einer erfindungsgemässen Start- und Landevorrichtung von vorn;
Figur 3 zeigt die Start- und Landevorrichtung gemäss Figur 2 von hinten;
Figur 4 zeigt die Start- und Landevorrichtung gemäss Figur 2 von vorn mit einer darauf ruhenden Drohne gemäss Figur 1;
Figur 5 zeigt die Anordnung aus Figur 4 in einer Seitenansicht und den Abwurf eines mit der Drohne transportierten Objekts;
Figur 6 zeigt einen Landeanflug einer Drohne gemäss Figur 1 auf eine Start- und Landevorrichtung gemäss Figur 2;

### DETAILLIERTE BESCHREIBUNG DER ZEICHNUNGEN

Erfindungsgemäss lässt sich ein Landeanflug einer Drohne auf eine Start- und Landevorrichtung nahezu lautlos durchführen. Dies ermöglicht auch Lieferungen zu Ruhezeiten wie etwa in der Nacht. Ein optionales Lichtleitsystem kann eine Landung in der Nacht unterstützen. Zudem wird durch Bereitstellen einer Start- und Landestation die Zielgruppe für eine Drohnen-Paketlieferung erhöht. So genügt beispielsweise ein Balkon, ein Fenster und/oder die Zugänglichkeit einer Hausfassade im Gegensatz zu anderen Konzepten, die Freiflächen oder Flachdächer benötigen. Ausserdem haben Dritte keinen Zugang zu dem Paket oder der Drohne und es kann somit eine zuverlässige Zustellung garantiert werden.

Die erfindungsgemässe Drohne kann sehr weite Strecken zurücklegen, da diese, wie auch andere Flächenmodelle, einen sehr effizienten Reiseflug ermöglicht. Die Drohne kann an der Wand beim Kunden gesichert und aufgeladen werden, weshalb ein kostspieliges Logistikzentrum zum regelmässigen Einlagern der Drohnen nicht unbedingt nötig ist. Diese "Parkplätze" bei den Kunden können auch als dezentrales Netzwerk betrachtet werden. So kann die Drohne auf Abruf auch direkt zu einem anderen Kunden fliegen, wo etwa ein Paket abgeholt werden muss.

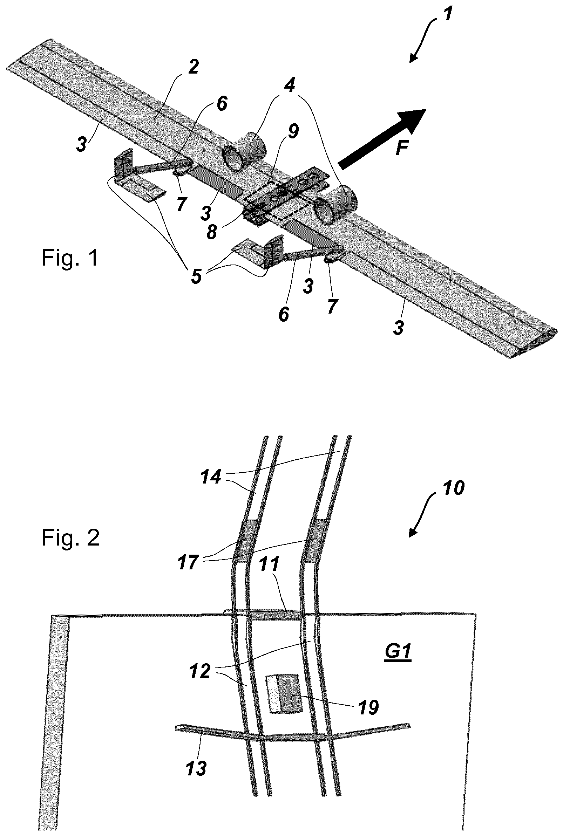

Figur 1 zeigt ein Ausführungsbeispiel einer erfindungsgemässen Starrflügler-Drohne 1 (im Folgenden "Drohne" genannt) mit Flügel 2, Flügelsteuerflächen 3, Antriebseinheiten 4, und zwei Heckleitwerken 5, welche je über ein Trägerelement 6 mit dem Flügel verbunden sind. Das Trägerelement 6 positioniert die Heckleitwerke 5 hinter und über dem Flügel 2, wobei sich "hinter" auf eine Flugrichtung F bezieht und "über" auf die Ausrichtung während des Flugs (d.h. Figur 1 zeigt die Drohne aus einer Vogelperspektive von oben). Wie in der Figur gezeigt, umfassen die Flügelsteuerflächen 3 die Querruder und die Klappen. Ebenso umfassen die Heckleitwerke 5 die Höhenruder und die Seitenruder.

Die Antriebseinheiten 4 weisen hier Impeller oder umschlossene Propeller auf und werden mittels einer Batterie elektrisch betrieben. Obwohl auf dem Flügel 2 gezeigt können die Antriebseinheiten 4 auch in den Flügel integriert sein. Impeller sind nochmals eine geräuschmindernde Verbesserung gegenüber Propellern.

Die Drohne hat an der Hinterkante des Flügels 2 zwei Strukturelemente 7, die von hinten aus zugänglich ist. Gezeigt sind die Strukturelemente 7 als drehbar gelagerte Rädchen bzw. Scheiben. Weiterhin verfügt die Drohne 1 über eine Objekthaltevorrichtung 8, auf der Pakete oder andere Sendungen für den Transport befestigt werden können.

In anderen Ausführungsformen kann das wenigstens eine Strukturelement einerseits andersartig geformt sein, etwa als Lasche, Gabel, Haken, Öse, Gleitschuh oder Nut, und andererseits kann es woanders angeordnet sein, etwa oberhalb oder unterhalb des Flügels oder an der Objekthaltevorrichtung 8. Eine Steuerungseinheit ist hier beispielhaft im Boardcomputer 9 der Drohne im oder am Flügel 2 untergebracht. Über die Steuerungseinheit kann die Drohne manuell ferngesteuert und/oder autonom betrieben werden. Eine Empfangseinheit, die ebenfalls im Boardcomputer 9 enthalten ist, kann Steuerungssignale empfangen, z.B. über Funktechnologien wie Wireless LAN oder das Mobilnetzwerk. Der Boardcomputer 9 weist auch eine Batterie auf zum Versorgen der Empfangseinheit, der Steuerungseinheit und der Antriebseinheiten 4 mit Strom bzw. zum Antreiben der Flügelsteuerflächen 3 und Heckleitwerke 5.

Die Objekthaltevorrichtung 8 kann optional ein Beförderungssystem aufweisen, über welches ein Paket vor oder hinter den Flügel befördert werden kann, wo es dann abgestossen wird bzw. herunterfällt.

Die Drohne 1 kann weiterhin ein Kamerasystem aufweisen, welches zumindest mit der Steuerungseinheit zusammenwirken kann. Zumindest eine Kamera des Kamerasystems zeichnet die Umgebung der Drohne auf und das Kamerasystem ist eingerichtet, die aufgezeichnete Umgebung zu analysieren, wobei insbesondere Objekterkennungs-Algorithmen eingesetzt werden. Das Kamerasystem kann basierend zumindest auf diesen Algorithmen die Drohne 1 steuern. Die mindestens eine Kamera ist bevorzugt an der Vorderkante oder der Unterseite des Flügels angeordnet.

Bevorzugt weist die Drohne 1 auch eine Navigationseinheit auf, insbesondere im Boardcomputer 9. Die Navigationseinheit umfasst dabei einen Global Navigation Satellite System (GNSS)-Empfänger, eine Inertial Measuring Unit (IMU) und/oder andere Instrumente zur Bestimmung von Position und Orientierung der Drohne 1 im Raum.

Eine Ausführungsform eines erfindungsgemässen Start- und Landevorrichtung 10 ist in Figur 2 gezeigt. Sie ist so gestaltet, dass sie vor einem Fenster, vor einer Fassade oder eine Geländeraussenseite G1 eines Balkons montiert werden kann. Die Start- und Landevorrichtung kann auch an einem Zusatz-Gerüst, welches auf ein Dach oder einen Zaun montiert ist, angebracht werden. Kurz gesagt weist die Start- und Landevorrichtung 10 eine Anbringungsvorrichtung 11 auf, über die die Start- und Landevorrichtung 10 an einer Struktur angebracht werden kann.

Die Start- und Landevorrichtung 10 weist weiterhin zwei Führungselemente 12 auf, die hier jeweils zwei Stangen haben, jedoch auch anders ausgeführt sein können, z.B. als Bleche oder breite Stangen. Die Führungselemente 12 sind frei zugänglich (d.h. sie weisen von der Struktur G1 weg) und so arrangiert, dass sie ausgehend von der Anbringungsvorrichtung 11 die vertikale Struktur herabverlaufen, dies mit mindestens einem Winkel von 1°, insbesondere 12° oder 6°, aber bis zu 89°. Ein Halteelement 13 ist quer auf den Führungselementen 12 angebracht und verläuft damit horizontal. Das Halteelement 13 hat ein Gegenstrukturelement, das von oben zugänglich ist. Das Gegenstrukturelement ist insbesondere auf das Strukturelement 7 der Drohne abgestimmt. So ist das Gegenstrukturelement hier eine nutartige Auslassung entlang des Halteelements 13, in welchen die beiden Rädchen 7 der Drohne aus Figur 1 einhaken oder einrasten können und insbesondere auch darin entlangrollen können.

Die hier gezeigte Start- und Landevorrichtung 10 weist zusätzlich noch Startführungselemente 14 auf. In einer anderen Ausführungsform sind diese Startführungselemente 14 starr an der Anbringungsvorrichtung 11 und/oder den Führungselementen 12 in der gezeigten Stellung montiert. Als optionale Extrafunktion fungieren aber die Startführungselemente 14 zugleich als eine Klemmvorrichtung, die an der Anbringungsvorrichtung 11 und/oder an den Führungselementen 12 schwenkbar befestigt ist. Insbesondere verfügt die Klemmvorrichtung (=Startführungselement) 14 über einen Zuschnapp-Mechanismus oder eine Motorisierung zum Festklemmen einer Drohne in einem geschlossenen Zustand (der geöffnete Zustand ist hier gezeigt). Alternativ kann die Klemmvorrichtung aber auch manuell in den offenen und den geschlossenen Zustand gebracht und dort entsprechend arretiert werden.

Als optionales Extra weist die Start- und Landevorrichtung auch eine Dockingstation 19 auf. Diese stellt Ladestrom und/oder einen uni- oder bidirektionalen Datenverkehr bereit. Eine Schnittstelle der Dockingstation ist angepasst an eine entsprechende - ebenfalls optionale - Schnittstelle der Drohne 1, d.h. die Schnittstelle kann stecker- bzw. kabelbasiert sein oder kabellos (induktives Laden, NFC, bluetooth, WiFi, etc.).

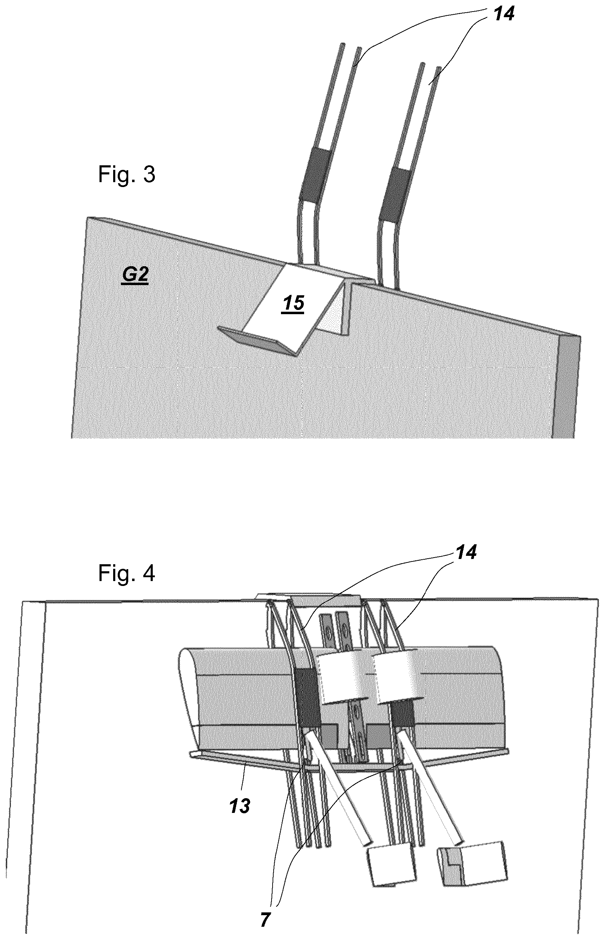

Figur 3 zeigt die Rückseite der beispielhaften Anbringungsvorrichtung 11, die hier noch eine optionale Objektauffangvorrichtung 15 aufweist, die mit dem optionalen Beförderungssystem der Drohne 1 zusammenwirken kann, d.h. die Objektauffangvorrichtung 15 ist so gestaltet, dass sie ein vom Beförderungssystem abgestossenes Paket auffangen kann. In diesem Falle handelt es sich bei der Objektauffangvorrichtung 15 um einen Auffangkorb; sie kann aber auch als Auffangnetz oder Auffangwanne ausgeführt sein. Im gezeigten Beispiel befindet sich die Objektauffangvorrichtung 15 auf der Geländerinnenseite G2 des auch in Figur 2 gezeigten Geländers. In anderen Ausführungsformen kann die Objektauffangvorrichtung allerdings auch an anderen Orten vorgesehen sein, etwa über der Anbringungsvorrichtung 11 oder unterhalb der Führungselemente 12.

Figur 4 zeigt wie die Drohne 1 aus Figur 1 auf der Start- und Landevorrichtung 10 ruht. Aufgrund der Neigung der Führungselemente zwischen 1° und 89°, insbesondere 12 oder 6°, gegenüber der Vertikalen kippt die in der Start- und Landevorrichtung 10 ruhende Drohne 1 nicht nach hinten. Dafür ist auch der Schwerpunkt der Drohne 1 entsprechend weit unten konfiguriert, wobei sich "unten" hier abermals auf eine Ausrichtung beim gewöhnlichen Flug bezieht.

In anderen Ausführungsformen muss die Schwerpunktlage aber nicht unbedingt so sein, dass das Herauskippen der Drohne 1 in der Parkstellung von der Konstruktion allein verhindert wird, denn die Start- und Landevorrichtung 10 kann zusätzlich, wie oben erläutert, eine Klemmvorrichtung 14 (wie in Figur 4 im geschlossenen Zustand gezeigt) und/oder eine Anzieheinheit aufweisen, die beispielsweise einen Elektromagneten oder einen Permanentmagneten aufweist, und die dadurch ausgebildet ist zum Bereitstellen einer magnetischen Anziehungskraft zum Anziehen der Drohne 1. Hierfür hat die Drohne 1 dann ein entsprechendes ferromagnetisches Gegenbauteil (insbesondere ebenfalls einen (Elektro-)Magnet) an definierter Stelle relativ zur Anzieheinheit. Die Anzieheinheit kann zusätzlich oder alternativ zu dem Startführungselement 14 bzw. zusätzlich oder alternativ zu der Klemmvorrichtung 14 vorgesehen sein.

Die Drohne 1 liegt mit ihren Strukturelementen 7 auf dem Halteelement 13 auf. Hierbei greifen die als Rädchen ausgebildeten Strukturelemente in ein auf der Oberseite des Halteelements 13 eingearbeitetes (in diesem Fall: als Nut ausgeführtes) Gegenstrukturelement ein. In anderen Ausführungsformen ist die Konstellation andersherum: das Gegenstrukturelement am Halteelement 13 hat mehrere seriell angeordnete Rädchen oder einfach nur eine glatte Kufe, und die Strukturelemente 7 an der Drohne 1 sind als Gabel oder Brücke ausgebildet, wobei die beiden Elemente wieder ineinandergreifen. In wiederum anderen Ausführungsformen kann das Halteelement 13 eine Art "Tasche" mit von oben zugänglicher Öffnung sein, wobei das Strukturelement 7 der Drohne als eine Art "Zunge" geformt ist, die leicht und mit räumlicher Toleranz in die Tasche einsteckbar ist.

Als optional zusätzliche Erweiterung können die Rädchen (=Strukturelement) 7 auf der zuspitzend gebogenen Schiene (=Halteelement) 13 entlangrollen und/oder entlanggleiten, sodass sich die Drohne so selbst zentrieren kann.

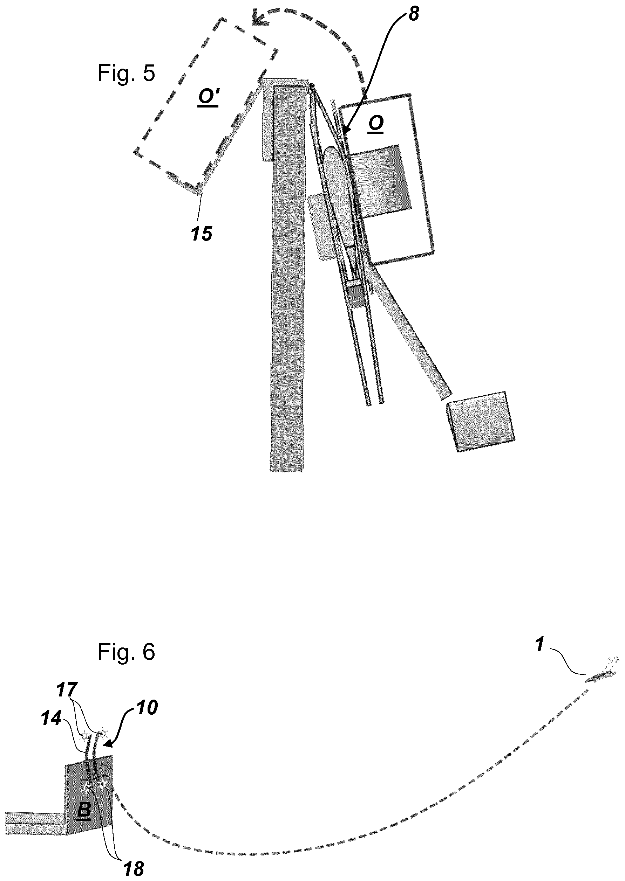

Ist die Drohne sicher gelandet, wie in Figur 6 in einer Seitenansicht gezeigt, kann die Objekthaltevorrichtung 8 ein optionales Beförderungssystem beinhalten, um ein zu lieferndes Objekt O nach oben heraus abzuwerfen, sodass es in der Objektauffangvorrichtung 15 landen kann (O').

Figur 6 zeigt einen beispielhaften Landeanflug, in welchem die Antriebseinheiten der Drohne zum Lärmschutz abgeschaltet werden können. Die Start- und Landevorrichtung 10 ist an einem Balkon B montiert. Die Trajektorie der Drohne (gestrichelte Linie) zeigt, dass die Drohne zeitweilig so tief sinkt, dass sie sich unterhalb der Start- und Landevorrichtung 10 befindet. Dann wird die Drohne so angesteuert, dass sie wieder aufsteigt um letztlich in einem passenden Winkel an die Führungselemente 12 anzustossen bzw. anzuliegen, wobei die Drohne dann nahezu keine kinetische Energie mehr hat und heruntersackt. Die Strukturelemente 7 zahnen dann mit dem Gegenstrukturelement am Halteelement ein.

Unter Berücksichtigung von vielen Faktoren wie z.B. Wind und Gewicht der Zuladung wird die Flugbahn zur Landung so berechnet, dass der Schwung, d.h. insbesondere die kinetische Energie in vertikaler Richtung, genau dann ablässt, wenn die Drohne sich kurz über der in den Figuren 4 und 5 gezeigten Position befindet. Ein optionales Lichtleitsystem kann dies unterstützen; so kann die Drohne, die dann über ein Kamerasystem verfügt, die Pose der Start- und Landevorrichtung 10 noch zuverlässiger, und insbesondere auch nachts, erkennen. Das Lichtleitsystem kann Leuchtdioden oder Reflektoren (hierfür kann die Drohne auch eine entsprechende Lichtquelle umfassen) aufweisen, die in Figur 2 und Figur 6 mit Referenzzeichen 17 und in Figur 6 mit Referenzzeichen 18 gezeigt sind.

Kurz vor der Landung ist die Klemmvorrichtung 14 ausgefahren. Im ausgefahrenen bzw. geöffneten Zustand kann über ein Display oder eine Warnleuchte zur Innenseite des Balkon B hin oder zu einem Fenster hin, das zum Balkon führt, eine Warnung signalisiert werden, etwa mit einer Aufschrift "Bitte zurücktreten". Im ausgefahrenen Zustand ist auch bevorzugt das Lichtleitsystem aktiv, damit die Drohne bei Nacht wie bei Tag das Landegerüst findet und somit das spezielle Landeverfahren noch besser voll autonom angewendet werden kann. Bei einer Landung der Drohne schützen die Startführungselemente 14 eventuell auf dem Balkon stehende Personen und gleichzeitig erweitert es die Landefläche für die Drohne. Dementsprechend kann die erste Berührung der Drohne auch ganz oben an den Startführungselementen 14, die hier als Klemmvorrichtung ausgeführt ist, erfolgen, die dann nach unten rutscht, bis die Drohne mit den Rädchen 7 auf der Schiene 13 (=Halteelement) steht.

Aufgrund der beidseitigen Neigung der Schiene 13 zentriert sich die Drohne in die Mitte. Optional kann eine kleine Einkerbung bei dem Knick der Schiene die Drohne in dieser Position dann einrasten lassen. Sobald die Drohne eingerastet ist, schliesst sich die Klemmvorrichtung 14 und klemmt die Drohne zwischen sich und den Führungselementen 12 ein. Somit ist die Drohne vor Windstürmen oder anderen Einflüssen gesichert und kann nicht mehr bewegt werden.

Wenn die Drohne 1 schlussendlich eingerastet ist, kann sie sich an die optionale Dockingstation 19 (siehe Figur 2) mit Daten- und/oder Stromkabeln oder kabellos andocken. Sollte die Objektauffangvorrichtung 15 noch voll sein oder der Mechanismus aus Figur 5 aus anderen Gründen nicht ausführbar sein, kann der Kunde benachrichtigt werden, dass das Paket zu entnehmen ist.

Die Start- und Landevorrichtung ist in der gezeigten Version auch für einen bevorzugten Startvorgang ausgelegt. In der geöffneten Stellung der Startführungselemente 14 können diese von der Drohne quasi als Rampe genutzt werden, womit ein sicherer Start vom Balkon oder von der Wand gewährleistet wird. In einer anderen Variante kann dieses Abstossen auch durch eine magnetische Kraft passieren, wobei hierfür eine Abstossvorrichtung an der Start- und Landevorrichtung vorgesehen ist. Eine solche Abstossvorrichtung kann aber auch mechanisch funktionieren, nämlich z.B. in dem ein vorgespanntes Abstosselement die Drohne zu einem spezifischen Zeitpunkt abstösst. In einer weiteren Ausführungsform kann die Drohne sich allerdings auch ganz von selbst "abstossen", indem einfach die Flügelsteuerflächen und die Heckleitwerke entsprechend angesteuert werden, um der Drohne die benötigte Auftriebskraft zu geben.

Bevorzugt hat die Drohne eine komplett flache Unterseite. Es ist keine punktgenaue Landung der Drohne notwendig - sie kann auf der gesamten Fläche zwischen den Führungselementen 12 (und ggf. Startführungselementen 14) und dem Halteelement 13 aufsetzten. Egal wo die Drohne auf dieser Fläche aufsetzt, sie rutscht, zumindest aufgrund der Schwerkraft, erst nach unten bis die Rädchen (=Strukturelement) 7 auf dem als Schiene ausgebildeten Halteelement 13 aufkommen und dort in das Gegenstrukturelement eingreifen. Eingeschaltete elektrische Schubdüsen 4 (=Antriebseinheiten) können optional das Abrutschen verlangsamen oder eine vom Soll abweichende Landeposition korrigieren. Aufgrund der Neigung der Schiene (=Halteelement) 13 gegenüber der Vertikalen, des Knicks in der Schiene (äussere Arme) und der flachen Unterseite der Drohne kann die Drohne in dem gezeigten Beispiel seitlich auf der Schiene rollen und sich von selbst zentrieren. Sollte dies dennoch nicht funktioniert haben, etwa, weil die Windeinflüsse sehr groß gewesen sind, kann über die elektrischen Schubdüsen (=Antriebseinheit) 4 und die Steuerflächen bei der Zentrierung der Drohne nachgeholfen werden.

In einer bevorzugten Ausführung ist die Drohne mit geschützten (umhüllten) elektrischen Schubdüsen 4 ausgelegt, damit die drehenden Teile nicht freistehend sind und dementsprechend die Verletzungsgefahr in jeder Situation verringert wird. Zudem wird die Lärmemission deutlich reduziert. Die Schubdüsen 4 auf der Oberseite der Drohne erlauben ausserdem einen höheren Auftrieb im Reiseflug und verringern die Lärmemission nach unten. Andere Anbringungsorte sind allerdings möglich.

Im Reiseflug kann die Objekthaltevorrichtung 8, die als Fördersystem ausgebildet sein kann, dazu genutzt werden, das Paket O nach vorne oder nach hinten zu verschieben und den Schwerpunkt der kompletten Konfiguration ideal einzustellen.

Die Drohne 1 ist bevorzugt mit mehreren kleinen Kameras ausgerüstet (als Teil des Kamerasystems), um andere Flugobjekte zu erkennen und auszuweichen, um die Landung präzise fliegen zu können und um vor dem Start zu überprüfen, ob Hindernisse vorhanden sind.

Die Drohne 1 fliegt im Schwebeflug in einem steilen Winkel auf die Landestation zu, wobei die Schubdüsen (=Antriebseinheiten) 4 ausgeschaltet sind. Das Kamerasystem erkennt über das eingeschaltete Lichtleitsystem im Videobild, wo die Start- und Landevorrichtung 10 positioniert ist. Abhängig von der Größe des Start- und Landegerüsts im Videobild, kann die Drohne den Abstand zur Landestation bemessen. Die Lage der Drohne kann intern über die IMU ermittelt werden und dementsprechend können der horizontale und vertikale Winkel zur Landestation eruiert werden.

Ab einem gewissen Abstand und Winkel zum Landegerüst wird der Abfangbogen eingeleitet, der so eingestellt wird, dass die Drohne mit dem richtigen Winkel und der richtigen Höhe auf der Start- und Landevorrichtung 10 aufsetzen kann. Dabei reicht die Energie vom Schwebeflug aus, ohne die Antriebseinheiten noch einmal einzuschalten. In diesem Fall landet die Drohne lautlos. Dabei werden viele Faktoren berücksichtigt, damit die Landung lautlos erfolgt, wie z.B. Paketgewicht, Paketgrösse, Windgeschwindigkeit, Windrichtung, Temperatur, Höhe, etc.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen, wobei der Umfang durch die nachfolgenden Ansprüche definiert ist.

## Patentansprüche

1. System aufweisend
― eine Starrflügler-Drohne (1) zum Ausliefern von Objekten, aufweisend
∘ einen Flügel (2) mit einer Tragfläche und mit Flügelsteuerflächen (3),
∘ mindestens zwei Antriebseinheiten (4),
∘ mindestens ein Heckleitwerk (5) mit Hecksteuerflächen, wobei das Heckleitwerk durch ein mit dem Flügel verbundenes Trägerelement (6) oberhalb des Flügels und hinter dem Flügel angeordnet ist,
∘ mindestens ein nach hinten ausgeprägtes und von hinten zugängliches Strukturelement (7),
∘ eine Objekthaltevorrichtung (8), die oberhalb vom Flügel angeordnet und zur Aufnahme eines Objekts ausgebildet ist,
∘ eine Steuerungseinheit, die zum Steuern der Starrflügler-Drohne (1), insbesondere der Flügelsteuerflächen, der Hecksteuerflächen und der Antriebseinheiten, basierend auf Steuerungssignalen ausgebildet ist und
∘ eine Empfangseinheit, die zum Empfangen von Steuerungssignalen ausgebildet ist,
und
― eine Start- und Landevorrichtung für die Starrflügler-Drohne (1) aufweisend
∘ eine Anbringungsvorrichtung (11), die dazu ausgebildet ist, die Start- und Landevorrichtung an einer Struktur anzubringen, insbesondere an eine vertikale Seite einer Struktur,
∘ mindestens ein Führungselement (12), das mit der Anbringungsvorrichtung verbunden und so ausgerichtet ist, dass es ausgehend von der Anbringungsvorrichtung zur Lotrechten abwärts und in einem Winkel zwischen 1° und 89°, insbesondere 12°, von der Struktur wegführt und
∘ ein Halteelement (13), das quer zu den Führungselementen angebracht ist und mindestens ein von oben zugängliches Gegenstrukturelement aufweist, **dadurch gekennzeichnet, dass** das Strukturelement der Starrflügler-Drohne (1) und das Gegenstrukturelement ineinandergreifbar ausgebildet sind, und die Starrflügler-Drohne (1) mittels der ineinandergreifenden Strukturelement und Gegenstrukturelement entlang des Halteelements verschiebbar ist.

2. System gemäß Anspruch 1, wobei die Start- und Landevorrichtung weiter aufweist:
∘ mindestens ein Startführungselement (14), das mit der Anbringungsvorrichtung verbunden ist und ausgehend von der Anbringungsvorrichtung in einem Winkel zwischen 1° und 89° zur Lotrechten aufwärts und von der Struktur wegführt,
wobei das Startführungselement als eine Klemmvorrichtung ausgebildet ist, die zwischen einem offenen Zustand und einem geschlossenen Zustand verschwenkbar ist, wobei die Klemmvorrichtung im offenen Zustand ausgehend von der Anbringungsvorrichtung in einem Winkel zwischen 1 ° und 89° zur Lotrechten aufwärts und von der Struktur wegführt und im geschlossenen Zustand bis an das Halteelement oder an das Führungselement anstossbar ist, wobei die Klemmvorrichtung motorisiert ist oder unter Vorspannung in den offenen Zustand bringbar ist und ausgelöst durch eine landende Starrflügler-Drohne (1) einen Klemmmechanismus bereitstellt, wobei die Klemmvorrichtung dazu ausgebildet ist, die gelandete Starrflügler-Drohne (1), insbesondere am Flügel, festzuklemmen.

3. System gemäss Anspruch 1 oder 2, wobei die Antriebseinheiten umschlossene Propeller aufweisen, insbesondere Impeller.

4. System gemäss einem der Ansprüche 1 bis 3, wobei das mindestens eine Strukturelement (7) ein Gleitelement, insbesondere ein Gleitschuh, oder eine drehbar gelagerte Scheibe ist.

5. System gemäss einem der Ansprüche 1 bis 4, wobei die Objekthaltevorrichtung ein Beförderungssystem aufweist, das dazu ausgelegt ist, ein von der Objekthaltevorrichtung aufgenommenes Objekt nach vorne oder hinten zu befördern, insbesondere um das Objekt vor oder hinter den Flügel zu befördern und vor oder hinter dem Flügel auszustossen oder um den Schwerpunkt während eines Flug zu verändern.

6. System gemäss einem der Ansprüche 1 bis 5, wobei die Starrflügler-Drohne (1) ein Kamerasystem aufweist, das zu einer Objekterkennung ausgebildet ist, wobei die Steuerungseinheit zum Steuern der Starrflügler-Drohne (1) weiterhin basierend auf der Objekterkennung ausgebildet ist.

7. System gemäß Anspruch 1, die Starrflügler-Drohne weiterhin aufweisend
∘ ein Kamerasystem, das zu einer Objekterkennung ausgebildet ist, wobei die Steuerungseinheit zum Steuern der Starrflügler-Drohne (1) weiterhin basierend auf der Objekterkennung ausgebildet ist,
und
wobei die Start- und Landevorrichtung ein Lichtleitsystem umfasst, das zumindest ein Leuchtelement oder einen Reflektor aufweist, wobei das Kamerasystem dazu ausgebildet ist, das Leuchtelement oder den Reflektor zu erkennen, wobei die Steuerungseinheit dazu ausgebildet ist, anhand des erkannten Leuchtelements oder Reflektors eine Pose der Start- und Landevorrichtung zu bestimmen und anhand der bestimmten Pose Steuerungssignale zu generieren.

8. System gemäss einem der Ansprüche 1 oder 3 bis 7, wobei die Start- und Landevorrichtung weiterhin aufweist
― mindestens ein Startführungselement (14), das mit der Anbringungsvorrichtung verbunden ist und ausgehend von der Anbringungsvorrichtung in einem Winkel zwischen 1° und 89° zur Lotrechten aufwärts und von der Struktur wegführt.

9. System gemäss einem der Ansprüche 1 bis 8, wobei die Start- und Landevorrichtung weiterhin aufweist
― eine Objektauffangvorrichtung, insbesondere wobei die Anbringungsvorrichtung die Objektauffangvorrichtung umfasst.

10. System gemäss einem der Ansprüche 1 bis 9, wobei die Start- und Landevorrichtung weiterhin aufweist
― eine Festhaltevorrichtung, insbesondere aufweisend einen Elektromagneten ausgebildet zum Bereitstellen einer Anziehungskraft zum Anziehen der Starrflügler-Drohne oder aufweisend einen mechanischen Festhaltemechanismus.

11. System gemäss einem der Ansprüche 1 bis 10, wobei die Starrflügler-Drohne (1) weiterhin eine Schnittstelle aufweist, die ausgebildet ist zum Empfang von elektrischer Energie und/oder Daten, und wobei die Start- und Landevorrichtung eine Gegenschnittstelle aufweist, die ausgebildet ist zum Versorgen einer Starrflügler-Drohne (1) mit elektrischer Energie und/oder Daten.

12. Anflugverfahren für ein System nach einem der Ansprüche 1 bis 11, mit den folgenden Schritten:
― Beladen einer Starrflügler-Drohne (1) mit einem Objekt,
― Steuern der Starrflügler-Drohne (1) basierend auf empfangenen Steuerungssignalen in Richtung eines Zustellortes bis eine definierte Restdistanz zum Zustellort verbleibt,
― nach Erreichen der Restdistanz, Deaktivieren der Antriebseinheiten,
― Aktivieren eines Lichtleitsystems einer Start- und Landevorrichtung, die an einer Struktur angebracht ist,
― Erkennen des Leuchtelements oder des Reflektors mit dem Kamerasystem,
― anhand des erkannten Leuchtelements oder Reflektors, Bestimmen einer Pose der Start- und Landevorrichtung mit der Steuerungseinheit,
― anhand der bestimmten Pose, Generieren von Steuerungssignalen mit der Steuerungseinheit,
― Steuern nur der Flügelsteuerflächen und der Hecksteuerflächen der im Segelflug befindlichen Starrflügler-Drohne (1) basierend auf den generierten Steuerungssignalen,
― Durchführen eines Landeanfluges, der die Starrflügler-Drohne (1) zwischenzeitlich unterhalb der Start- und Landevorrichtung sinken und dann parabelartig zur Start- und Landevorrichtung wieder ansteigen lässt,
― Erreichen eines Stillstandes der Starrflügler-Drohne (1) bezogen auf eine vertikale Richtung an der Start- und Landevorrichtung,
― durch Gravitationskraft verursachtes Absenken der Starrflügler-Drohne (1) in eine Ruheposition an der Start- und Landevorrichtung, wobei ein Strukturelement der Starrflügler-Drohne (1) und ein Gegenstrukturelement eines Halteelementes der Start- und Landevorrichtung ineinandergreifen.

## Claims

1. A system comprising
a fixed wing drone (1) for delivering objects, comprising
a wing (2) having an airfoil and having wing control surfaces (3),
at least two drive units (4),
at least one tail assembly (5) having tail control surfaces, wherein the tail assembly is arranged above the wing and behind the wing by a carrier element (6) connected to the wing,
at least one structure element (7) protruding towards the rear and accessible from the rear,
an object holding device (8), which is arranged above the wing and is designed to accommodate an object,
a control unit, which is designed to control the fixed wing drone (1), in particular the wing control surfaces, the tail control surfaces, and the drive units, based on control signals, and
a receiving unit, which is designed to receive control signals, and
a takeoff and landing device for the fixed wing drone (1) comprising
an attachment device (11), which is designed to attach the takeoff and landing device to a structure, in particular to a vertical side of a structure,
at least one guide element (12), which is connected to the attachment device and is designed so that, starting from the attachment device, it leads away from the structure downward and at an angle between 1° and 89°, in particular 12° in relation to the vertical, and
a holding element (13), which is attached transversely to the guide elements and comprises at least one counter structure element accessible from above, **characterized in that** the structure element of the fixed wing drone (1) and the counter structure element are designed to be interlockable, and the fixed wing drone (1) is displaceable along the holding element by means of the interlocking structure element and counter structure element.

2. A system according to claim 1, comprising
at least one takeoff guide element (14), which is connected to the attachment device and leads, starting from the attachment device, at an angle between 1° and 89° in relation to the vertical upward and away from the structure, wherein the takeoff guide element is designed as a clamping device, which is pivotable between an open state and a closed state, wherein the clamping device, in the open state, leads upward and away from the structure starting from the attachment device at an angle between 1° and 89° in relation to the vertical and can abut the holding element or the guide element in the closed state, wherein the clamping device is motorized or can be moved into the open state under pre-tension and provides a clamping mechanism triggered by a landing fixed wing drone (1), wherein the clamping device is designed to clamp the landed fixed wing drone (1), in particular on the wing.

3. The system according to claim 1 or 2, wherein the drive units (4) comprise enclosed propellers, in particular impellers.

4. The system according to any of claims 1 to 3, wherein the at least one structure element (7) is a sliding element or a rotatably mounted disk.

5. The system according to any of claims 1 to 4, wherein the object holding device comprises a conveyor system, which is designed to convey an object accommodated by the object holding device to the front or rear, in particular to convey the object in front of or behind the wing and eject it in front of or behind the wing or to change the center of gravity during a flight.

6. The system according any of claims 1 to 5, wherein the fixed wing drone (1) further comprises a camera system, which is designed for object recognition, wherein the control unit is furthermore designed to control the fixed wing drone (1) based on the object recognition.

7. A system according to claim 1, wherein the fixed wing drone further comprises a camera system, which is designed for object recognition, wherein the control unit is furthermore designed to control the fixed wing drone (1) based on the object recognition, wherein the takeoff and landing device comprises a light guiding system, which comprises at least one lighting element or a reflector, wherein the camera system is designed to recognize the lighting element or the reflector, wherein the control unit is designed to determine a pose of the takeoff and landing device with the aid of the recognized lighting element or reflector and to generate control signals with the aid of the determined pose.

8. The system according to claim 1 or any of 3 to 7, wherein the takeoff and landing device further comprises at least one takeoff guide element (14), which is connected to the attachment device and leads, starting from the attachment device, at an angle between 1° and 89° in relation to the vertical upward and away from the structure.

9. The system according to any of claims 1 to 8, wherein the takeoff and landing device further comprises an object catching device, in particular wherein the attachment device comprises the object catching device.

10. The system according to any of claims 1 to 9, wherein the takeoff and landing device further comprises a fixing device, in particular comprising an electromagnet designed to provide an attraction force for attracting the fixed wing drone or comprising a mechanical fixing mechanism.

11. The system according to any one of Claims 1 to 10, wherein the fixed wing drone (1) furthermore comprises an interface, which is designed to receive electrical energy and/or data, and wherein the takeoff and landing device comprises a counter interface, which is designed to supply a fixed wing drone with electrical energy and/or data.

12. An approach method for a system according to any one of Claims 1 to 11, having the following steps:
loading a fixed wing drone (1) with an object,
controlling the fixed wing drone (1) based on received control signals in the direction of a delivery location until a defined remaining distance remains to the delivery location,
after reaching the remaining distance, deactivating the drive units,
activating a light guiding system of a takeoff and landing device, which is attached to a structure,
recognizing the lighting element or the reflector using the camera system,
with the aid of the recognized lighting element or reflector, determining a pose of the takeoff and landing device using the control unit,
with the aid of the determined pose, generating control signals using the control unit,
controlling only the wing control surfaces and the tail control surfaces of the fixed wing drone (1), which is in glide flight, based on the generated control signals,
carrying out a landing approach which causes the fixed wing drone (1) to temporarily sink below the takeoff and landing device and then rise again in a parabola to the takeoff and landing device,
achieving a standstill of the fixed wing drone (1) with respect to a vertical direction at the takeoff and landing device,
lowering of the fixed wing drone (1) caused by gravitational force into a rest position on the takeoff and landing device, wherein a structure element of the fixed wing drone (1) and a counter structure element of a holding element of the takeoff and landing device interlock.

## Revendications

1. Système comprenant
un drone à voilure fixe (1) destiné à distribuer des objets, comprenant
une voilure (2) ayant un aileron et ayant des surfaces de commande de voilure (3),
au moins deux unités d'entraînement (4),
au moins un ensemble queue (5) ayant des surfaces de commande de queue, dans lequel l'ensemble queue est agencé au-dessus de la voilure et derrière la voilure par un élément porteur (6) raccordé à la voilure,
au moins un élément de structure (7) en saillie vers l'arrière et accessible depuis l'arrière,
un dispositif de maintien d'objet (8), qui est agencé au-dessus de la voilure et est conçu pour loger un objet,
une unité de commande, qui est conçue pour commander le drone à voilure fixe (1), en particulier les surfaces de commande de voilure, les surfaces de commande de queue, et les unités d'entraînement, sur la base de signaux de commande, et
une unité de réception, qui est conçue pour recevoir des signaux de commande, et
un dispositif de décollage et d'atterrissage pour le drone à voilure fixe (1) comprenant
un dispositif d'attache (11), qui est conçu pour attacher le dispositif de décollage et d'atterrissage à une structure, en particulier à un côté vertical d'une structure,
au moins un élément de guidage (12), qui est raccordé au dispositif d'attache et est conçu de sorte que, en partant du dispositif d'attache, il se dirige en éloignement de la structure vers le bas et selon un angle entre 1° et 89°, en particulier de 12° par rapport à la verticale, et
un élément de maintien (13), qui est attaché transversalement aux éléments de guidage et comprend au moins un élément de structure de contrefiche accessible depuis le dessus,
**caractérisé en ce que** l'élément de structure du drone à voilure fixe (1) et l'élément de structure de contrefiche sont conçus pour être interverrouillables, et le drone à voilure fixe (1) peut être déplacé le long de l'élément de maintien au moyen de l'élément de structure d'interverrouillage et de l'élément de structure de contrefiche.

2. Système selon la revendication 1, comprenant
au moins un élément de guidage de décollage (14), qui est raccordé au dispositif d'attache et se dirige, en partant du dispositif d'attache, selon un angle entre 1° et 89° par rapport à la verticale vers le haut et en éloignement de la structure,
dans lequel l'élément de guidage de décollage est conçu sous la forme d'un dispositif de serrage, qui peut pivoter entre un état ouvert et un état fermé, dans lequel le dispositif de serrage, dans l'état ouvert, se dirige vers le haut et en éloignement de la structure en partant du dispositif d'attache selon un angle entre 1° et 89° par rapport à la verticale et peut buter sur l'élément de maintien ou l'élément de guidage dans l'état fermé, dans lequel le dispositif de serrage est motorisé ou peut être amené à se mouvoir dans l'état ouvert sous l'effet d'une pré-tension et fournit un mécanisme de serrage déclenché par un drone à voilure fixe (1) en atterrissage, dans lequel le dispositif de serrage est conçu pour serrer le drone à voilure fixe (1) posé au sol, en particulier sur la voilure.

3. Système selon la revendication 1 ou 2, dans lequel les unités d'entraînement (4) comprennent des propulseurs enfermés, en particulier des hélices.

4. Système selon l'une quelconque des revendications 1 à 3, dans lequel l'au moins un élément de structure (7) est un élément coulissant ou un disque monté rotatif.

5. Système selon l'une quelconque des revendications 1 à 4, dans lequel le dispositif de maintien d'objet comprend un système convoyeur, qui est conçu pour convoyer un objet logé par le dispositif de maintien d'objet vers l'avant ou l'arrière, en particulier pour convoyer l'objet devant ou derrière la voilure et l'éjecter devant ou derrière la voilure ou pour modifier le centre de gravité au cours d'un vol.

6. Système selon l'une quelconque des revendications 1 à 5, dans lequel le drone à voilure fixe (1) comprend en outre un système de caméra, qui est conçu pour une reconnaissance d'objet, dans lequel l'unité de commande est en outre conçue pour commander le drone à voilure fixe (1) sur la base de la reconnaissance d'objet.

7. Système selon la revendication 1, dans lequel le drone à voilure fixe comprend en outre un système de caméra, qui est conçu pour une reconnaissance d'objet, dans lequel l'unité de commande est en outre conçue pour commander le drone à voilure fixe (1) sur la base de la reconnaissance d'objet, dans lequel le dispositif de décollage et d'atterrissage comprend un système de guidage de lumière, qui comprend au moins un élément d'éclairage ou un réflecteur, dans lequel le système de caméra est conçu pour reconnaître l'élément d'éclairage ou le réflecteur, dans lequel l'unité de commande est conçue pour déterminer une pose du dispositif de décollage et d'atterrissage avec l'aide de l'élément d'éclairage ou du réflecteur reconnu et pour générer des signaux de commande avec l'aide de la pose déterminée.

8. Système selon la revendication 1 ou l'une quelconque des revendications 3 à 7, dans lequel le dispositif de décollage et d'atterrissage comprend en outre au moins un élément de guidage de décollage (14), qui est raccordé au dispositif d'attache et se dirige, en partant du dispositif d'attache, selon un angle entre 1° et 89° par rapport à la verticale vers le haut et en éloignement de la structure.

9. Système selon l'une quelconque des revendications 1 à 8, dans lequel le dispositif de décollage et d'atterrissage comprend en outre un dispositif de saisie d'objet, en particulier dans lequel le dispositif d'attache comprend le dispositif de saisie d'objet.

10. Système selon l'une quelconque des revendications 1 à 9, dans lequel le dispositif de décollage et d'atterrissage comprend en outre un dispositif de fixation, en particulier comprenant un électro-aimant conçu pour fournir une force d'attraction afin d'attirer le drone à voilure fixe ou comprenant un mécanisme de fixation mécanique.

11. Système selon l'une quelconque des revendications 1 à 10, dans lequel le drone à voilure fixe (1) comprend en outre une interface, qui est conçue pour recevoir de l'énergie électrique et/ou des données, et dans lequel le dispositif de décollage et d'atterrissage comprend une interface de contrefiche, qui est conçue pour alimenter un drone à voilure fixe avec de l'énergie électrique et/ou des données.

12. Procédé d'approche pour un système selon l'une quelconque des revendications 1 à 11, ayant les étapes suivantes :
chargement d'un drone à voilure fixe (1) avec un objet,
commande du drone à voilure fixe (1) sur la base de signaux de commande reçus dans la direction d'un emplacement de distribution jusqu'à ce qu'il reste une distance restante définie par rapport à l'emplacement de distribution,
après l'atteinte de la distance restante, désactivation des unités d'entraînement,
activation d'un système de guidage de lumière d'un dispositif de décollage et d'atterrissage, qui est attaché à une structure,
reconnaissance de l'élément d'éclairage ou du réflecteur à l'aide du système de caméra,
avec l'aide de l'élément d'éclairage ou du réflecteur reconnu, détermination d'une pose du dispositif de décollage et d'atterrissage à l'aide de l'unité de commande,
avec l'aide de la pose déterminée, génération de signaux de commande à l'aide de l'unité de commande,
commande uniquement des surfaces de commande de voilure et des surfaces de commande de queue du drone à voilure fixe (1), qui est en vol de descente, sur la base des signaux de commande générés,
réalisation d'une approche d'atterrissage qui amène le drone à voilure fixe (1) à s'enfoncer temporairement sous le dispositif de décollage et d'atterrissage, puis à s'élever à nouveau en parabole jusqu'au dispositif de décollage et d'atterrissage,
obtention d'un état statique du drone à voilure fixe (1) vis-à-vis d'une direction verticale au niveau du dispositif de décollage et d'atterrissage,
abaissement du drone à voilure fixe (1) provoqué par la force gravitationnelle jusque dans une position de repos sur le dispositif de décollage et d'atterrissage, dans lequel un élément de structure du drone à voilure fixe (1) et un élément de structure de contrefiche d'un élément de maintien du dispositif de décollage et d'atterrissage s'interverrouillent.
